# EUROPÄISCHE PATENTSCHRIFT

(11) **EP 1 412 934 B1**
(45) Veröffentlichungstag und Bekanntmachung des Hinweises auf die Patenterteilung: **17.11.2010**
(21) Anmeldenummer: 02754952.6
(22) Anmeldetag: 30.07.2002
(51) Int. Cl.: G09G 3/28

(54) **VERFAHREN UND VORRICHTUNG ZUR RAUSCHREDUKTION BEI EINER PULSBREITENGESTEUERTEN BILDANZEIGEVORRICHTUNG**
METHOD AND DEVICE FOR NOISE REDUCTION IN A PULSE-WIDTH CONTROLLED IMAGE DISPLAY DEVICE
PROCEDE ET DISPOSITIF POUR DIMINUER LE BRUIT DANS UN DISPOSITIF D'AFFICHAGE D'IMAGES, A COMMANDE D'IMPULSIONS EN LARGEUR

(30) Priorität: 04.08.2001 DE 10138353
(43) Veröffentlichungstag der Anmeldung: 28.04.2004
(73) Patentinhaber: Grundig Multimedia B.V., 1077 ZX Amsterdam (NL)
(72) Erfinder: FISCHBECK, Udo, 90766 Fürth (DE); SPINDLER, Johannes, 90482 Nürnberg (DE)
(74) Vertreter: LOUIS, PÖHLAU, LOHRENTZ
(86) Internationale Anmeldenummer: PCT/EP2002/008440
(87) Internationale Veröffentlichungsnummer: WO 2003/015065

(56) Entgegenhaltungen:
- EP-A- 0 629 083
- EP-A- 0 720 139
- US-A- 4 573 075
- US-A- 4 682 230
- US-A- 6 091 389
- PATENT ABSTRACTS OF JAPAN vol. 1998, no. 09, 31. Juli 1998 (1998-07-31) -& JP 10 091120 A (FUJITSU GENERAL LTD), 10. April 1998 (1998-04-10)
- "TEMPORAL-BASED DITHERING FOR REDUCING PERCEIVED QUANTIZATION ERROR IN VIDEO DISPLAYS" IBM TECHNICAL DISCLOSURE BULLETIN, IBM CORP. NEW YORK, US, Bd. 38, Nr. 9, 1. September 1995 (1995-09-01), Seiten 61-63, XP000540185 ISSN: 0018-8689

## Beschreibung

Die Erfindung betrifft ein Verfahren und eine Vorrichtung zur Rauschreduktion bei einer pulsbreitengesteuerten Bildanzeigevorrichtung.

Ein derartiges Verfahren und eine derartige Vorrichtung kommen beispielsweise bei Plasmadisplays zum Einsatz, welche in Zukunft die bei höherwertigen Fernsehgeräten derzeit noch verwendeten Farbbildröhren ergänzen oder ersetzen werden. Im Zusammenhang mit Farbbildröhren ist der Benutzer hochwertiger Fernsehgeräte seit dem Ende der 80er Jahre aufgrund der 100-Hz-Technologie an eine flackerfreie Darstellung gewöhnt.

Aus der Zeitschrift Radio Fernsehen Elektronik RFE, Heft 2, 1997, Seiten 18-20, ist ein Plasmadisplay bekannt, das aus zwei Glasplatten mit matrixartig angeordneten Elektroden besteht, zwischen denen sich ein Edelgasgemisch befindet. Die Bildinformation wird bei Plasmadisplays nicht zeilenweise dargestellt wie bei Kathodenstahlröhren, sondern vollbildweise. Da bei einem Plasmadisplay die einzelnen Bildpunkte nicht zu beliebigen Zeiten einzeln ein- und ausgeschaltet werden können, muss die Aktivierung der Bildpunkte für das gesamte Display in einem Aktivierungsdurchgang erfolgen.

Die Ansteuerung eines Plasmadisplays erfolgt in mehreren Phasen: einer Adressierungs- oder Initialisierungsphase, einer Halte- oder Aktivierungsphase und einer Löschphase. -

In der Adressierungs- oder Initialisierungsphase werden alle Zellen des Plasmadisplays vorgeladen, welche in der darauf folgenden Halte- oder Aktivierungsphase aktiviert werden sollen. Im letzten Schritt, der Löschphase, werden die vorgeladenen Zellen wieder entladen, die Bildinformation wird gelöscht.

Das zur Darstellung eines Fernsehbildes zur Verfügung stehende Zeitintervall wird in Teilzeitintervalle unterschiedlicher Dauer bzw. unterschiedlicher Gewichtung zerlegt, während derer in Abhängigkeit vom Helligkeitswert eines jeweiligen Bildpunktes eine vorgegebene Aktivierungssequenz gewählt wird. Dies entspricht einem ein- oder mehrmaligen Aufleuchten des jeweiligen Bildpunktes während des zur Bilddarstellung zur Verfügung stehenden Zeitintervalles, wobei jedem Aufleuchten eine vorgegebene Zeitdauer zugeordnet ist.

Derartige bekannte Plasmadisplays werden beispielsweise von den Firmen Fujitsu und NEC am Markt vertrieben.

Aus der DE 198 33 597 A1 sind ein Verfahren und eine Vorrichtung zur Flimmerreduzierung bei pulsbreitengesteuerten Bildanzeigevorrichtungen bekannt, insbesondere bei einem Farbplasmadisplay. Ein derartiges Farbplasmadisplay dient beispielsweise der Darstellung von Fernsehbildern. Das Farbplasmadisplay wird mittels eines Pulsbreitenmodulators angesteuert, wobei zur Ansteuerung die Dauer eines Fernsehbildes in eine Reihe von Teilbildern bzw. Teilzeitintervallen zerlegt wird, die nacheinander dargestellt werden. Zur Flackerreduzierung, insbesondere einer 50-Hz-Flackerreduzierung, wird die Reihenfolge der Teilzeitintervalle und/oder der Aktivierungssequenzen der Teilzeitintervalle derart vorgegeben, dass das Flackern der darzustellenden Bilder minimal ist.

Weiterhin ist aus der DE 198 37 307 A1 eine bewegungsdetektorabhängige Veränderung der Reihenfolge der Teilzeitintervalle bekannt. Beim Vorliegen von Bewegungen wird die Reihenfolge der Teilzeitintervalle derart gewählt, dass Bewegungsartefakte vermieden werden. Ansonsten erfolgt die Wahl der Reihenfolge der Teilzeitintervalle derart, dass 50Hz-Flackerstörungen reduziert werden.

Weiterhin ist es im Zusammenhang mit Plasmadisplays bereits bekannt, die Helligkeit eines darzustellenden Bildes zu erfassen, aus dem erfassten Helligkeitswert für jedes der Teilzeitintervalle des darzustellenden Bildes eine maximal zulässige Leuchtdauer abzuleiten und bei einer Veränderung des erfassten Helligkeitswertes die maximal zulässige Leuchtdauer für jedes der Teilzeitintervalle zu verändern. Diese Veränderung erfolgt derart, dass bei erfasstem dunklen Bildinhalt bzw. geringem Helligkeitswert die maximal zulässige Leuchtdauer in jedem der Teilzeitintervalle um dieselbe Zeitdauer erhöht wird. Ergibt hingegen die Helligkeitserfassung des darzustellenden Bildes, dass ein insgesamt heller Bildinhalt vorliegt, dann wird die maximal zulässige Leuchtdauer für jedes der Teilzeitintervalle um eine Zeitdauer verringert, die für alle Teilzeitintervalle gleich ist.

Ein Nachteil dieser Vorgehensweise besteht darin, dass der Kontrast des darzustellenden Bildes reduziert ist, da bei erfasster großer Helligkeit des darzustellenden Bildes die Zeitdauer für die Darstellung heller Bildbestandteile reduziert ist und bei erfasster geringer Helligkeit eines darzustellenden Bildes dunkelgraue Bildbestandteile hellgrau dargestellt werden, da diese durch die beschriebene Beaufschlagung mit einem konstanten Offset nach oben gezogen werden, d. h. länger leuchten.

Ferner ist aus der deutschen Patentanmeldung 100 09 858 ein Verfahren zur Verbesserung des Kontrasts einer pulsbreitengesteuerten Bildanzeigevorrichtung bekannt. Bei diesem Verfahren wird eine Veränderung der maximal zulässigen Leuchtdauer für die Teilzeitintervalle derart vorgenommen, dass die maximal zulässige Leuchtdauer für Teilzeitintervalle mit geringerer Wertigkeit kleineren Änderungen unterworfen wird als die maximal zulässige Leuchtdauer für Teilzeitintervalle mit höherer Wertigkeit.

Ausgehend von diesem Stand der Technik liegt der Erfindung die Aufgabe zugrunde, ein neues Verfahren und eine neue Vorrichtung anzugeben, bei welchen das Rauschen reduziert ist.

Diese Aufgabe wird durch ein Verfahren mit den im Anspruch 1 angegebenen Merkmalen bzw. durch eine Vorrichtung mit den im Anspruch 4 angegebenen Merkmalen gelöst.

Vorteilhafte Ausgestaltungen und Weiterbildungen der Erfindung ergeben sich aus den abhängigen Ansprüchen.

Die Vorteile der Erfindung bestehen insbesondere darin, dass in dunklen Bereichen eines angezeigten Bildes das Rauschen reduziert ist. Damit wird dem Umstand Rechnung getragen, dass bei pulsbreitengesteuerten Bildanzeigevorrichtungen, insbesondere Plasmadisplays, in dunklen Bildbereichen auftretendes Rauschen besonders störend ist. Dies ist darauf zurückzuführen, dass dunklen Bildbereichen kurze Teilzeitintervalle zugeordnet sind. Ist beispielsweise anhand von Rauschen nicht nur das dem LSB eines Mehrbit-Wortes zugeordnete Teilzeitintervall aktiviert, sondern auch das benachbarte Teilzeitintervall LSB+1, dann bedeutet dies bereits eine Verdoppelung der Helligkeit, welche vom menschlichen Auge registriert und als störend empfunden wird.

Dies gilt insbesondere dann, wenn zu einer künstlichen Erhöhung der Anzahl der Graustufen im Sinne eines "Dithering-Vorganges" sowohl das LSB als auch das LSB+1 jeweils auf vier benachbarte Pixel des anzuzeigenden Bildes aufgeteilt werden. In diesem Fall erzeugt vorliegendes Rauschen zusätzliche räumliche Effekte im genannten Viererblock, die für das menschliche Auge störend in Erscheinung treten.

Durch das beanspruchte Ersetzen von Bildpunkten mit niedrigen Helligkeitswerten durch gemittelte Helligkeitswerte wird das in dunklen Bildbereichen auftretende Rauschen reduziert. In hellen Bildbereichen erfolgt

Weiterhin ist aus Patent Abstract of Japan vol. 1998, no. 09, 31. Juli 1998 (1998-07-31) -& JP 10 091120 A (Fujitsu General LTD(,10. April 1998 (1998-04-10) eine Anordnung bekannt, die mit Hilfe eines Fehlerdiffusionsschaltkreis bei Plasmadisplays eine Verbesserung der Bilddarstellung in den dunklen Bildbereichen erreicht. keine Veränderung des Bildsignals, da Rauschen in hellen Bildbereichen weniger störend in Erscheinung tritt.

Das beanspruchte Verfahren ist sowohl im Sinne einer eindimensionalen Filterung als auch einer zweidimensionalen als auch einer dreidimensionalen Filterung verwendbar. Bei einer zweidimensionalen Filterung sind lediglich zusätzliche Zeilenspeicher und bei einer dreidimensionalen Filterung Bildspeichermittel zusätzlich vorzusehen.

Gegebenenfalls kann die durchgeführte Filterung sich auch auf Bildpunkte erstrecken, die im Übergangsbereich zwischen gefilterten und nicht gefilterten Daten liegen. Dadurch werden auch die Übergänge weicher gestaltet.

Weiterhin kann die Anzahl der aufeinanderfolgenden Bildpunkte, die im ersten Schritt überprüft werden, unterschiedlich groß gewählt werden. Dies gilt auch für die Anzahl der Bildpunkte, die zur Mittelwertbildung herangezogen werden. In diesen Fällen muss natürlich auch die Verzögerungszeit des im Weg des nichtgefilterten Signals liegenden Verzögerungsgliedes entsprechend angepasst werden.

Weitere vorteilhafte Eigenschaften der Erfindung ergeben sich aus der Erläuterung eines Ausführungsbeispiels anhand der Figuren. Es zeigt:
Figur 1 eine Skizze zur Erläuterung der Ansteuerung einer pulsbreitengesteuerten Bildanzeigevorrichtung,
Figur 2 ein Blockdiagramm zur Erläuterung eines Ausführungsbeispiels für die Erfindung, und
Figur 3 ein Zeitdiagramm zur Veranschaulichung der Funktionsweise der Erfindung.

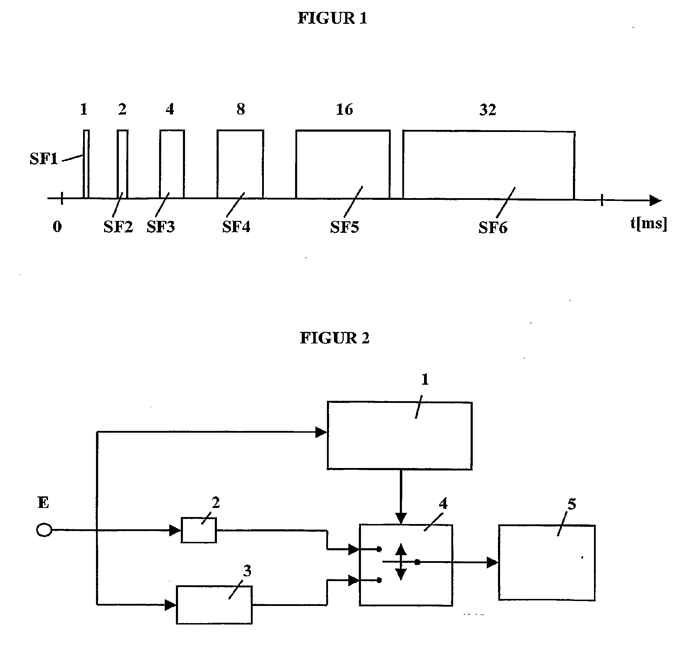

Die Figur 1 zeigt eine Skizze zur Erläuterung der Ansteuerung einer pulsbreitengesteuerten Bildanzeigevorrichtung, beispielsweise eine Plasmadisplays. Das zur Darstellung eines Fernsehbildes zur Verfügung stehende Zeitintervall von 20 Millisekunden wird in Teilzeitintervalle SF1, SF2, ..., SF6 zerlegt. Jedes dieser Teilzeitintervalle weist eine unterschiedliche Dauer bzw. Gewichtung G auf, die in der Figur 1 jeweils oberhalb der die Teilzeitintervalle repräsentierenden Kästchen angegeben ist. Während dieser Teilzeitintervalle wird in Abhängigkeit vom Helligkeitswert eines jeweiligen Bildpunktes eine vorgegebene Aktivierungssequenz gewählt. Dies entspricht einem ein- oder mehrmaligen Aufleuchten des jeweiligen Bildpunktes während des zur Bilddarstellung zur Verfügung stehenden Zeitintervalles, wobei jedem Aufleuchten eine vorgegebene Zeitdauer zugeordnet ist.

Bei dunklen Bildpunkten erfolgt beispielsweise nur ein Aufleuchten während des Teilzeitintervalles SF1, welches dem LSB eines Videosignals entspricht. Erfolgt aufgrund von Rauschen auch ein Aufleuchten während des Teilzeitintervalles SF2, welches im Vergleich zu SF1 die annähernd doppelte zeitliche Länge bzw. Gewichtung aufweist, dann bedeutet dies bereits eine nahezu Verdoppelung der Helligkeit, welche vom menschlichen Auge als störend empfunden wird.

Um derartige durch Rauschen verursachten Störungen zu vermeiden, die vor allem in dunklen Bildbereichen auftreten, erfolgt eine Signalverarbeitung, wie sie in der Figur 2 anhand eines Ausführungsbeispiels für die Erfindung beschrieben ist.

Die Figur 2 zeigt ein Blockdiagramm zur Erläuterung eines Ausführungsbeispiels für die Erfindung. Dem Eingang E wird ein Videoeingangssignal in Form eines Signaldatenstromes zugeführt, welcher den Helligkeitssignalen aufeinanderfolgender Bildpunkte des auf dem Plasmadisplays anzuzeigenden Bildes entspricht. Dieses Videoeingangssignal wird auf drei Signalwege aufgeteilt.

Im oberen Signalweg gelangt es an eine Prüfeinheit 1, in welcher überprüft wird, ob die Helligkeit dreier aufeinanderfolgender Bildpunkte jeweils kleiner ist als ein vorgegebener Helligkeitsschwellenwert. Ist dies nicht der Fall, dann generiert die Prüfeinheit 1 ein Steuersignal für einen Schalter 4, durch welches der Schalter 4 in seine obere Schaltstellung gebracht wird. Ist die Helligkeit dreier aufeinanderfolgender Bildpunkte hingegen jeweils kleiner als der vorgegebene Helligkeitsschwellenwert, dann erzeugt die Prüfeinheit 1 ein Steuersignal für den Schalter 4, durch welches der Schalter 4 in seine untere Schaltstellung gebracht wird.

Im mittleren Signalweg ist ein Verzögerungsglied 2 vorgesehen, in welchem der Eingangsdatenstrom um die Dauer zweier Bildpunkte verzögert wird. Das Ausgangssignal des Verzögerungsgliedes 2 wird dem oberen Eingang des Schalters 4 zugeführt.

Im unteren Signalweg wird das Eingangssignal über ein Filter 3 geleitet, in welchem eine lineare oder gewichtete Mittelwertbildung dreier aufeinanderfolgender Bildpunkte erfolgt. Das Ausgangssignal des Filters 3 wird dem unteren Eingang des Schalters 4 zugeführt.

Der Ausgang des Schalters 4 ist mit einem Plasmadisplay 5 verbunden, auf welchem die Signaldarstellung erfolgt.

Bei der gezeigten Schaltung wird dann, wenn die Helligkeit dreier aufeinanderfolgender Bildpunkte jeweils unter dem Helligkeitsschwellenwert liegt, der untere Signalweg durchgeschaltet, so dass ein gemitteltes Signal dem Display 5 zugeführt wird, und dann, wenn die Helligkeit dreier aufeinanderfolgender Bildpunkte nicht jeweils unter dem Helligkeitsschwellenwert liegt, der mittlere Signalweg durchgeschaltet, so dass das verzögerte, ansonsten aber unveränderte Eingangssignal an das Display 5 weitergeleitet wird.

Die vorstehend beschriebene Prüfung und die in Abhängigkeit vom Prüfungsergebnis durchgeführte Signalverarbeitung wird Bildpunkt für Bildpunkt wiederholt.

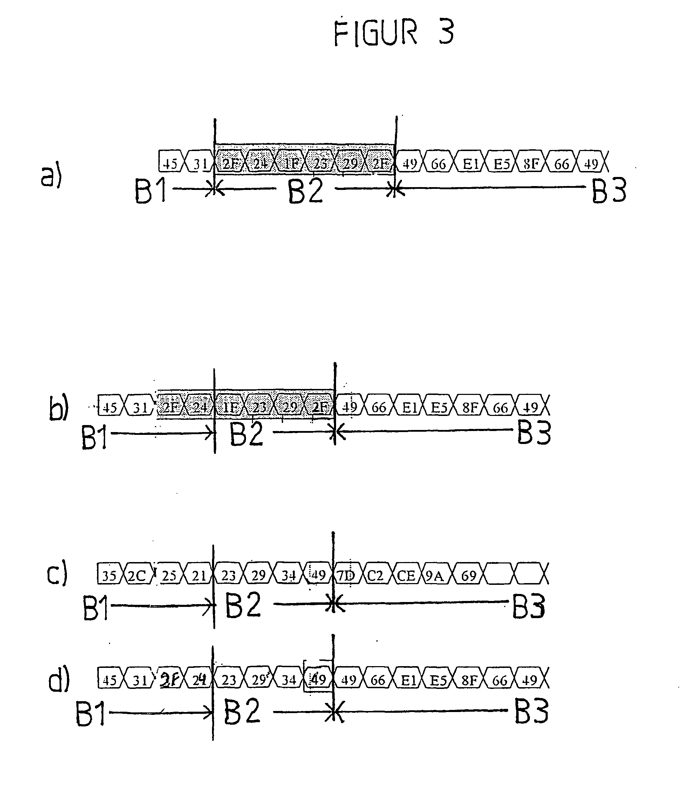

Die Figur 3 zeigt ein Zeitdiagramm, in welchem die Funktionsweise der Erfindung veranschaulicht ist. In der Figur 3a ist der am Eingang E vorliegende Signaldatenstrom gezeigt, in welchem die Helligkeitswerte der aufeinanderfolgenden Bildpunkte in hexadezimaler Form angegeben sind. Dieser Signaldatenstrom ist zur Veranschaulichung in drei Bereiche B1, B2, B3 unterteilt, wobei die Helligkeitswerte der Bildpunkte in den Bereichen B1 und B3 größer sind als der vorgegebene Helligkeitsschwellenwert, der beim vorliegenden Ausführungsbeispiel bei "30" in hexadezimaler Darstellung liegt, und wobei die Helligkeitswerte der Bildpunkte im Bereich B2 kleiner sind als der genannte Helligkeitsschwellenwert.

In der Figur 3b ist der am Ausgang des Verzögerungsgliedes 2 vorliegende Signaldatenstrom gezeigt, der gegenüber dem Eingangssignaldatenstrom um die Dauer zweier Bildpunkte verzögert ist.

Die Figur 3c zeigt den verzögerten gefilterten Datenstrom, wie er am Ausgang des Filters 3 vorliegt, und die Figur 3d den am Ausgang des Schalters 4 vorliegenden Datenstrom. Aus letzterem ist ersichtlich, dass die Helligkeitswerte in den Bereichen B1 und B3, abgesehen von der Verzögerung um die Dauer zweier Bildpunkte, mit den entsprechenden Helligkeitswerten des Eingangsdatenstroms übereinstimmen. Die Helligkeitswerte im Bereich B2 sind hingegen gemäß der vorliegenden Erfindung durch Mittelwerte ersetzt, die jeweils aus den Helligkeitswerten dreier aufeinanderfolgender Bildpunkte ermittelt wurden.

Durch diese Mittelwertbildung, die nur in dunklen Bildbereichen vorgenommen wird, wird das Rauschen in diesen dunklen Bildbereichen verringert.

## Patentansprüche

1. Verfahren zur Rauschreduktion bei einer pulsbreitengesteuerten Bildanzeigevorrichtung, wobei das für eine Bilddarstellung zur Verfügung stehende Zeitintervall in aufeinanderfolgende gewichtete Teilzeitintervalle aufgeteilt wird und aus den einen Signaldatenstrom bildenden, den Bildpunkten des darzustellenden Bildes zugehörigen, in Form von Mehrbit-Wörtern vorliegenden Helligkeitswerten durch Umwandlung den Teilzeitintervallen zugeordnete Aktivierungssequenzen erzeugt werden, **dadurch gekennzeichnet, dass**
a) in einem ersten Schritt überprüft wird, ob die Helligkeit mehrerer aufeinanderfolgenden Bildpunkte größer ist als ein vorgegebener Helligkeitsschwellenwert,
b) in einem zweiten Schritt dann,
- wenn die Helligkeit mehrerer aufeinanderfolgender Bildpunkte jeweils kleiner ist als der vorgegebene Helligkeitsschwellenwert, eine Mittelwertbildung der Helligkeitswerte dieser mehreren aufeinanderfolgenden Bildpunkte erfolgt und dieser Mittelwert in den Signaldatenstrom eingesetzt wird, und dann,
- wenn die Helligkeit mehrerer aufeinanderfolgender Bildpunkte nicht jeweils kleiner ist als der vorgegebene Helligkeitsschwellenwert, das zugehörige Mehrbit-Wort in unveränderter Form der Umwandlung in Aktivierungssequenzen zugeführt wird, und
c) der erste und zweite Schritt für jeden der aufeinanderfolgenden Bildpunkte durchgeführt wird.

2. Verfahren nach Anspruch 1,
**dadurch gekennzeichnet, dass**
im zweiten Schritt dann, wenn die Helligkeit mehrerer aufeinanderfolgender Bildpunkte kleiner ist als der vorgegebene Helligkeitsschwellenwert, eine gewichtete Mittelwertbildung der Helligkeitswerte mehrerer aufeinanderfolgender Bildpunkte erfolgt.

3. Verfahren nach Anspruch 1 oder 2,
**dadurch gekennzeichnet, dass**
die Anzahl der im ersten Schritt zu überprüfenden Bildpunkte mindestens drei ist.

4. Vorrichtung zur Durchführung des Verfahrens nach Anspruch 1, aufweisend:
- einen Eingangsanschluss (E) zum Empfang des den Helligkeitssignalen entsprechenden Signaldatenstromes,
- eine Prüfeinheit (1) zur Überprüfung, ob die Helligkeit mehrerer aufeinanderfolgender Bildpunkte kleiner ist als der vorgegebene Helligkeitsschwellenwert,
- einen von der Prüfeinheit gesteuerten Umschalter (4), der ausgangsseitig dann, wenn die Helligkeit mehrerer aufeinanderfolgender Bildpunkte nicht kleiner ist als der vorgegebene Helligkeitsschwellenwert, den zeitverzögerten Signaldatenstrom in unveränderter Form bereitstellt, und dann, wenn die Helligkeit mehrerer aufeinanderfolgender Bildpunkte kleiner ist als der vorgegebene Helligkeitsschwellenwert, einen durch Mittelwertbildung gewonnen Signaldatenstrom bereitstellt.

## Claims

1. Method for noise reduction in a pulse-width-controlled image display device, wherein the time interval available for representing the image is divided into successive weighted partial time intervals and activation sequences assigned to the partial time intervals are generated by conversion from the brightness values which form a signal data stream, are associated with the pixels of the image to be represented and are present in the form of multibit words,
**characterized in that**
a) in a first step a check is made to determine whether the brightness of a plurality of successive pixels is greater than a predetermined brightness threshold value,
b) in a second step,
- when the brightness of a plurality of successive pixels is in each case less than the predetermined brightness threshold value, the brightness values of this plurality of successive pixels are averaged and this average value is inserted into the signal data stream, and
- when the brightness of a plurality of successive pixels is not in each case less than the predetermined brightness threshold value, the associated multibit word is supplied in unchanged form for conversion into activation sequences, and
c) the first and second steps are carried out for each of the successive pixels.

2. Method according to Claim 1,
**characterized in that**
in the second step, when the brightness of a plurality of successive pixels is less than the predetermined brightness threshold value, a weighted averaging of the brightness values of a plurality of successive pixels is performed.

3. Method according to Claim 1 or 2,
**characterized in that**
the number of pixels to be checked in the first step is at least three.

4. Device for carrying out the method according to Claim 1, comprising:
- an input terminal (E) for receiving the signal data stream corresponding to the brightness signals,
- a test unit (1) for checking whether the brightness of a plurality of successive pixels is less than the predetermined brightness threshold value,
- a changeover switch (4) controlled by the test unit, which switch, on the output side, when the brightness of a plurality of successive pixels is not less than the predetermined brightness threshold value, provides the time-delayed signal data stream in unchanged form and, when the brightness of a plurality of successive pixels is less than the predetermined brightness threshold value, provides a signal data stream obtained by averaging.

## Revendications

1. Procédé pour diminuer le bruit dans un dispositif d'affichage d'images à commande d'impulsions en largeur, dans lequel l'intervalle de temps disponible pour une représentation d'image est divisé en intervalles de temps partiels pondérés successifs, et des séquences d'activation attribuées aux intervalles de temps partiels sont générées par conversion à partir des valeurs de luminosité constituant le flux de données de signal, associées aux pixels de l'image à représenter et présentes sous forme de mots à bits multiples, **caractérisé en ce que**
a) dans une première étape, il est vérifié si la luminosité de plusieurs pixels successifs est supérieure à une valeur de seuil de luminosité prédéfinie,
b) dans une deuxième étape,
- au cas où la luminosité de plusieurs pixels successifs est respectivement inférieure à la valeur de seuil de luminosité prédéfinie, un calcul de moyenne des valeurs de luminosité de ces plusieurs pixels successifs est effectué et cette moyenne est insérée dans le flux de données de signal, et
- au cas où la luminosité de plusieurs pixels successifs n'est pas respectivement inférieure à la valeur de seuil de luminosité prédéfinie, le mot à bits multiples associé est amené sous forme inchangée à la conversion en séquences d'activation, et
c) la première et la deuxième étape sont exécutées pour chacun des pixels successifs.

2. Procédé selon la revendication 1,
**caractérisé en ce que**
dans la deuxième étape, au cas où la luminosité de plusieurs pixels successifs est inférieure à la valeur de seuil de luminosité prédéfinie, un calcul de moyenne pondéré des valeurs de luminosité de plusieurs pixels successifs est effectué.

3. Procédé selon la revendication 1 ou 2,
**caractérisé en ce que**
le nombre des pixels à vérifier dans la première étape est au moins de trois.

4. Dispositif pour exécuter le procédé selon la revendication 1, présentant :
- une borne d'entrée (E) pour recevoir le flux de données de signal correspondant aux signaux de luminosité,
- une unité de contrôle (1) pour vérifier si la luminosité de plusieurs pixels successifs est inférieure à la valeur de seuil de luminosité prédéfinie,
- un commutateur inverseur (4) commandé par l'unité de contrôle et qui fournit en sortie, dans le cas où la luminosité de plusieurs pixels successifs n'est pas inférieure à la valeur de seuil de luminosité prédéfinie, le flux de données de signal temporisé sous forme inchangée, et dans le cas où la luminosité de plusieurs pixels successifs est inférieure à la valeur de seuil de luminosité prédéfinie, un flux de données de signal obtenu par un calcul de moyenne.
